# EUROPEAN PATENT SPECIFICATION

(11) **EP 3 139 738 B1**
(45) Date of publication and mention of the grant of the patent: **27.11.2019**
(21) Application number: 15732941.8
(22) Date of filing: 05.05.2015
(51) Int. Cl.: A01N 59/00, A01N 25/02, A01N 65/08, A01N 65/12, A01N 65/20, A01N 65/44

(54) **PRODUCT FOR ACTIVATING DEFENCE MECHANISMS IN PLANTS**
PRODUKT ZUR AKTIVIERUNG DER ABWEHRMECHANISMEN IN PFLANZEN
PRODUIT D'ACTIVATION DES MÉCANISMES DE DÉFENSE CHEZ LES PLANTES

(30) Priority: 07.05.2014 IT BG20140014
(43) Date of publication of application: 15.03.2017
(73) Proprietor: MULTIOSSIGEN S.P.A., 24020 Gorle (BG) (IT)
(72) Inventor: FRANZINI, Marianno, I-24020 Gorle (BG) (IT)
(74) Representative: Gatti, Enrico
(86) International application number: PCT/IB2015/053274
(87) International publication number: WO 2015/170252

(56) References cited:
- WO-A1-2012/120454
- WO-A1-2013/040721
- SHARMA Y K ET AL: "Ozone-induced responses in Arabidopsis thaliana: The role of salicylic acid in the accumulation of defense-related transcripts and induced resistance", PROCEEDINGS OF THE NATIONAL ACADEMY OF SCIENCES OF THE UNITED STATES OF AMERICA, NATIONAL ACADEMY OF SCIENCES, US, vol. 93, no. 10, 1 May 1996 (1996-05-01), pages 5099-5104, XP002284803, ISSN: 0027-8424, DOI: 10.1073/PNAS.93.10.5099
- Martina Schraudner ET AL: "Biochemical Plant Responses to Ozone' Ill. Activation of the Defense-Related Proteins fl-1,3-Glucanase and Chitinase in Tobacco Leaves", Plant Physiol, 1 January 1992 (1992-01-01), pages 1321-1328, XP55582524, Retrieved from the Internet: URL:https://www.ncbi.nlm.nih.gov/pmc/artic les/PMC1080627/pdf/plntphys00708-0064.pdf

## Description

### DISCLOSURE

The present invention refers to a method for activating defence mechanisms in plants more specifically for defence against bacteria, viruses and moulds, applicable in particular to plants. Pest control is generically defined as a set of operations aimed at the elimination, or at least limitation, of the parasites present in a given environment, which in this particular case refers mainly to the agricultural sector, comprising both plants and animals.

In the majority of cases, chemical products are used which solve the pest problem but often induce other problems such as pollution and/or toxicity. Furthermore, said products have long decay times and therefore leave harmful residues in the environment.

Furthermore, among the substances present in the tissues of fruit-bearing plants (leaves, fruit) there are compounds, often quantitatively irrelevant, which perform a significant protective function for the plant itself and play an important role in terms of nutrition and health. The main ones are certain secondary metabolites such as polyphenols, vitamins, microelements and enzymes.

The presence of these substances in plant tissues improves the response of the plants to biotic and abiotic stress.

Particular attention is therefore paid to interventions that can maximise the contents of these substances both in the fruit, to increase its nutraceutic value, and in leaves, to strengthen the plant defences.

WO2013040721 discloses that natural oils are first treated with alcohols and subsequently in a reactor by means of bubbling with a mixture of ozone and oxygen, for a certain amount of time that ensures the production of an ozonized oil for the treatment of mycosis and bacterial or viral infections in humans, animals or plants.

WO2012120454 discloses a composition that comprises an effective amount of an ozonized oil and an effective amount of an essential oil extracted from chamomile and the uses thereof in the cosmetic and pharmaceutical sector.

The object of the present invention is to provide a method for the activation of defence mechanisms in plants which overcomes the drawbacks of the known art.

A further object is to provide a method for the activation of defence mechanisms in plants which is not harmful either to animals or the plants themselves.

Further characteristics of the invention are described in the dependent claims.

This solution has various advantages with respect to the solutions of the known art.

The use of vegetable oil, preferably of alimentary type, does not pollute the environment and the food products treated, according to the present invention, can be used in human food without any problems.

The disinfecting and pesticidal characteristic of ozone is used, which is active on bacteria, viruses, fungi and spores.

Furthermore, by adding ozone to the oil, ozonides are created, therefore obtaining greater retention of the same within the oil.

The ozonides are the result of saturation of the fatty acid molecules contained in the vegetable oil by the 3 atoms of oxygen of the ozone.

The ozone remains within the oil for approximately 2 years with only a slight percentage loss (1 to 3%) in the ozone content, unlike water which retains the ozone for only a short time, in particular at higher temperatures (over 25-30°C).

The characteristics and advantages of the present invention will become evident from the following detailed description of a practical embodiment.

According to the present invention, the method comprises ozonized vegetable oil, i.e. ozone is added to the oil and said ozonized oil is used as a pesticide in agriculture.

Olive oil, sunflower oil, maize oil, peanut oil, blended vegetable oil and fatty vegetable oils in general are considered vegetable oils.

To ozonize the vegetable oil, a machine is used which produces in a known manner 1 to 1000g/hour of ozone which is placed in a mixing chamber with the oil, so as to obtain an ozone concentration of 4/10 mg/l, with a mixing pressure from 0.1 to 6 bars for a time ranging from 6 hours to 1 hour.

An oil is therefore obtained comprising ozone in a quantity ranging from 1% to 10% and more preferably in a quantity ranging from 1% to 5% of the weight of the compound (oil and ozone).

In other words, ozonides are formed in quantities ranging from 100 to 1500 for each litre of oil.

In one embodiment of the ozonized oil, according to the present invention, 1 litre of olive oil was placed in contact with a flow of 10 g/hour of ozone for a time of 1 hour at a pressure of 2 bar. An ozonizer of known type was used.

The ozonized oil is then sprayed, with known spraying machines, over the plants to be treated.

In one advantageous embodiment, the ozonized oil is mixed with water to obtain the desired percentage of ozone in the mixture.

In particular, the ozonized oil is mixed with water in proportions of 1 to 1 and up to 1 to 100 (1 portion of oil and 100 portions of water), more preferably in proportions of 1 to 50 and 1 to 10. In other words, the ozonized oil in water is in a quantity ranging from 1% to 100% of the total weight, and more preferably in a quantity ranging from 1% to 15% of the total weight.

For the mixing of oil and water in order to obtain an emulsion, preferably oil in water, an emulsifier is used in a quantity ranging from 5% to 10% of the total weight of the mixture, such as soya lecithin for example.

Other emulsifiers can be used, for example Eucerin anhydrous, Lanolin anhydrous, Lanolin alcohols, Phosphatidylcholine, Cetyl alcohol, Glyceryl monostearate, Cetyl stearyl alcohol, Glycol distearate, Beeswax, Polyethylene glycol monostearate, Cetyl palmitate, Polysorbate, Hydrogenated castor oil, Sodium stearate.

The use of the mixture of ozonized oil and water or ozonized oil only depends on the degree of activation required, whether the treatment is only preventive or is curative, and the degree of plant infestation to be treated.

The ozonized oil, mixed with the water if necessary, is sprayed using traditional methods on plants, flowers and soil.

Field tests have shown that fruit-bearing plants infested with parasites and treated with ozonized oil are freed from the pests in a time comparable to if not shorter than other plants infested and treated with traditional methods.

A study was also conducted at the Research Centre (CRA) for Agriculture and Mediterranean Crops in Acireale (CT). Two-year-old sweet orange trees (Citrus sinensis) were used belonging to the cultivar 'Ovale' grafted on citrange Carrizo (Poncirus trifoliate). The plants were grown for ornamental purposes in 8 litre polyethylene pots filled with a mixture of blond peat and agricultural soil and, although small, they were completely developed and with fruit.

27 plants were used divided into three blocks of 9 plants each. The first block was considered a control, the second block was treated according to a first method and the third block was treated according to a second method.

Each block (of 9 plants) was divided into sub-blocks of 3 plants. Each sub-block of 3 plants was arranged randomly among the other sub-blocks.

An ozonized oil with the following composition was used.

One litre of sunflower oil was placed in contact (in a known manner) with a flow of ozone of 10g/hour for 1 hour at a pressure of 2 bar.

The oil prepared in this way (in a quantity subsequently specified) was mixed with 5 litres of water and food-grade soya lecithin in a quantity equal to 10% of the total weight of the mixture.

The plants were treated by spraying the entire quantity of mixture using a portable sprayer.

The first block (control) was treated with water only.

The second block, according to the first method, was treated once with ozonized oil in a percentage of 4% of the total weight of the mixture.

Therefore the mixture comprised ozonized oil 4%, soya lecithin 10% and water 86%, with respect to the total weight of the mixture.

The third block, according to the second method, was treated twice (first treatment at time T0 and second treatment at time T1 after 7 days from T0) with ozonized oil in a percentage of 2% of the total weight of the mixture.

Therefore the mixture comprised ozonized oil 2%, soya lecithin 10% and water 88%, with respect to the total weight of the mixture.

The following characteristics were analysed before and after the treatment and a statistical analysis of the data was performed.

Determination of the SPAD index in the leaves, determination of the content of macro, meso and micro-elements in the leaves, determination of the Vitamin C content in the leaves, determination of the total Polyphenol content in the leaves, quality of the fruit, determination of the ascorbic acid (Vitamin C) content in the juices and determination of the total Polyphenol content in the juices. It is observed from the results that before the treatments, no statistically significant differences were recorded between the samples of leaves (method 1 and method 2) compared to the control, in terms of both the level of chlorophyll (SPAD) and the polyphenol and ascorbic acid content. Furthermore, the data of the macro and micro elements highlight that the plants subject to the treatment were in an optimal nutritional and physiological condition.

In the plants subject to the treatment with 4% ozonized vegetable oil (method 1) an increase in the ascorbic acid content was observed already after one week (7 days) from the treatment, with a statistically significant increase (p ≤ 0.001) of 40% with respect to the control (Table 1). The measurement was taken 7 days after the treatment T1.

The same trend also occurred in the plants treated with 2% of ozonized vegetable oil (method 2) (Table 2). The measurements were taken 7 days after the treatment T1, and 7 days and 4 hours after treatment T2.

The total polyphenol content determined in the leaves for method 1 is shown in Table 3 and for method 2 in Table 4. After 4 hours from the second treatment the total polyphenol content further increases with respect to the control and, lastly, after 8 hours reaches a content of 438 mg/100g of catechin, with a statistically significant trend of +10% with respect to the control.

The measurements were taken 7 days after the treatment T1, and 7 days and 4 hours after the treatment T2, and 7 days and 8 hours after the treatment T2.

The ascorbic acid content was determined by HPLC (5) using a Waters Alliance 2695 HPLC (Waters Corporation, Milford, MA) interfaced with a Waters 996 PDA detector and controlled by the Empower software (Waters, Milford, MA). The column used was a C18 Hypersil ODS (Phenomenex, Torrance CA) 250 mm x 4.6 mm i.d., 5 µm maintained at a temperature of 35°C and the elution was performed with orthophosphoric acid 0.02 at a flow rate of 1.0 ml/min.

5 ml of centrifuged juice were poured into a flask and brought to a total volume of 50 ml with 3% solution of metaphosphoric acid. A portion of this solution was filtered with syringe on 0.45 µm PTFE filter and then 20 µl of filtrate were injected in HPLC. The elution was performed with orthophosphoric acid 0.02M at a flow rate of 1.0 ml/min. The wavelength was fixed at 260 nm. The concentration of Vitamin C was expressed as mg/100 ml of ascorbic acid.

The total polyphenols in the leaves were determined with the Folin-Ciocalteau spectrophotometric method (7).

The samples of leaves were washed with distilled water, frozen to -80°C, lyophilized and then ground.

A portion of 0.2 g of ground powder was extracted in 10 ml of 95% ethanol for 3h in the dark in an oscillating stirrer. It was then centrifuged and a portion of the solution (1 ml) appropriately diluted was mixed with 5 ml of commercial Folin-Ciocalteau reagent (previously diluted 1:10 v/v with water) and 4 ml of a 7.5% solution of sodium carbonate. The mixture was placed in the dark for 2 hours at ambient temperature, subsequently a spectrophometric reading was taken at 740 nm and the total phenol concentration was expressed as mg/100 g of catechin.

The physical-chemical parameters such as total acidity (TA) and total soluble solids (TSS), determined on the fruit juice of the orange cv. "Ovale' (data not shown), highlighted that prior to the treatment the fruit had reached an optimal ripening level and these parameters did not change after the different treatments performed.

With regard to the ascorbic acid content, the fruit showed a mean ascorbic acid content of 25 mg/100 ml. A week after the treatments, no statistically significant differences were encountered in either sample compared to the control.

It was therefore found that the ozonized oil, according to the present invention, is potentially able to improve the responses of the plants subject to biotic and abiotic stress.

In fact, the treatment stimulated an increase in the content of these secondary metabolites in the leaves and above all in the plants treated with 4% of one single solution.
This increase, recorded to a lesser extent also in the leaves of plants treated twice with 2%, can be considered a direct effect of the treatment performed.

The increase in concentration of these substances was obtained after seven days from the first treatment with significant differences compared to the non-treated samples. The positive results obtained for samples 1 and 2 cannot be ascribed to an improved nutritional and/or phytosanitary condition of the plants since, as reported in Tables 1-3, none of the samples tested for the SPAD index and for the macro, meso and micro-element content recorded significant differences.

In conclusion, considering the positive effects encountered in the vegetable tissues studied and the lack of negative effects (burning, desiccation etc.) on the plants treated, the ozonized vegetable oil can certainly be considered a substance with corroborative activity.

**Table 1**

| | Control mg/100 g ascorbic acid | Sample 1 (4%) mg/100 g ascorbic acid |
|---|---|---|
| T0 | 90 mg | |
| T1 | 100 mg | 165 mg |

**Table 2**

| | Control mg/100 g ascorbic acid | Sample 2 (2%) mg/100 g ascorbic acid |
|---|---|---|
| T0 | 90 mg | |
| T1 | 100 mg | 120 mg |
| T2 | 100 mg | 129 mg |

**Table 3**

| | Control mg/100 g catechin | Sample 1 (4%) mg/100 g catechin |
|---|---|---|
| T0 | 338 mg | |
| T1 | 390 mg | 430 mg |

**Table 4**

| | Control mg/100 g catechin | Sample 2 (2%) mg/100 g catechin |
|---|---|---|
| T0 | 338 mg | |
| T1 | 400 mg | 410 mg |
| T2 (7 days + 4 hours) | 400 mg | 415 mg |
| T2 (7 days + 8 hours) | 390 mg | 438 mg |

## Claims

1. Method for the activation of defence mechanisms in plants comprising the steps of:
mixing vegetable oil and ozone to provide ozonized oil, wherei the obtained oil comprises ozone in a quantity ranging from 1% to 10% of the total weight;
mixing said ozonized oil with water to provide ozonized oil in water in a quantity ranging from 1% to 15% of the total weight, and an emulsifier in a quantity ranging from 5% to 10% of the total weight to provide a compound;
spraying said compound to said plants.

2. Method according to claim 1 **characterized in that** said vegetable oil is one or more of the following oils: olive oil, sunflower oil, maize oil, peanut oil, blended vegetable oil.

3. Method according to claim 1 **characterized in that** said emulsifier is soya lecithin.

4. Method according to claim 1 **characterized in that** said emulsifier is one or more of the following emulsifier; soya lecithin, Eucerin anhydrous, Lanolin anhydrous, Lanolin alcohols, Phosphatidylcholine, Cetyl alcohol, Glyceryl monostearate, Cetyl stearyl alcohol, Glycol distearate, Beeswax, Polyethylene glycol monostearate, Cetyl palmitate, Polysorbate, Hydrogenated castor oil, Sodium stearate.

5. Method according to claim 1 **characterized in that** said plants comprises the Citrus sinensis.

6. Method according to claim 1 **characterized in that** said phase of mixing vegetable oil with ozone comprises the formation of ozonides in quantities from 100 to 1500 for each litre of oil.

## Patentansprüche

1. Ein Verfahren für die Aktivierung von Schutzmechanismen in Pflanzen, welches folgende Schritte umfasst:
die Mischung von Pflanzenöl und Ozon, um ozonisiertes Öl zu gewinnen, wobei das so gewonnene Öl jeweils Ozon in einer Menge enthält, die 1% bis 10% des Gesamtgewichts beträgt;
die Mischung des genannten ozonisierten Öls mit Wasser, um ozonisiertes Öl in Wasser zu erhalten, und zwar in einer Menge, die von 1% bis 15% des Gesamtgewichts reicht, sowie einen Emulgator in einer Menge, die 5% bis 10% des Gesamtgewichts beträgt, um ein Präparat zu erhalten;
das Sprühen des genannten Präparats auf die genannten Pflanzen.

2. Ein Verfahren gemäß Anspruch 1, **dadurch gekennzeichnet, dass** es sich bei dem genannten Pflanzenöl jeweils um eins oder mehrere der folgenden Öle handelt: Olivenöl, Sonnenblumenöl, Maisöl, Erdnussöl, gemischtes Pflanzenöl.

3. Ein Verfahren gemäß Anspruch 1, **dadurch gekennzeichnet, dass** es sich bei dem genannten Emulgator um Sojalezithin handelt.

4. Ein Verfahren gemäß Anspruch 1, **dadurch gekennzeichnet, dass** es sich bei dem genannten Emulgator um einen oder mehrere der folgenden Emulgatoren handelt: Sojalezithin, wasserfreies Eucerin, wasserfreies Lanolin, Lanolinalkohole, Phosphatidylcholin, Cetylalkohol, Glyzerylmonostearat, Cetylstearylalkohol, Glykoldistearat, Bienenwachs, Polyethylenglykolmonostearat, Cetylpalmitat, Polysorbat, hydriertes Rizinusöl, Natriumstearat.

5. Ein Verfahren gemäß Anspruch 1, **dadurch gekennzeichnet, dass** die genannten Pflanzen Citrus sinensis umfassen.

6. Ein Verfahren gemäß Anspruch 1, **dadurch gekennzeichnet, dass** der genannte Schritt des Mischens von Pflanzenöl mit Ozon die Bildung von Ozoniden in Mengen von jeweils 100 bis 1500 pro Liter Öl umfasst.

## Revendications

1. Procédé pour l'activation de mécanismes de défense chez les plantes comprenant les étapes de:
mélange d'huile végétale et d'ozone pour fournir de l'huile ozonisée, où l'huile obtenue comprend de l'ozone en quantité allant de 1% à 10% du poids total;
mélange de ladite huile ozonisée avec de l'eau pour fournir une huile ozonisée en eau en quantité allant de 1% à 15% du poids total, et un émulsifiant en quantité allant de 5% à 10% du poids total pour fournir un composé;
pulvérisation dudit composé auxdites plantes.

2. Procédé selon la revendication 1 **caractérisé en ce que** ladite huile végétale est une ou plusieurs des huiles suivantes: huile d'olive, huile de tournesol, huile de maïs, huile d'arachide, huile végétale mélangée.

3. Procédé selon la revendication 1 **caractérisé en ce que** ledit émulsifiant est de la lécithine de soja.

4. Procédé selon la revendication 1 **caractérisé en ce que** ledit émulsifiant est un ou plusieurs des émulsifiants suivants: lécithine de soja, eucérine anhydre, lanoline anhydre, alcools de lanoline, phosphatidylcholine, alcool cétyleque, monostéarate de glycéryle, alcool cétylstéarylique, distéarate de glycol, cire d'abeille, monostéarate de polyéthylène glycol, palmitate de cétyle, polysorbate, huile de ricin hydrogénée, stéarate de sodium.

5. Procédé selon la revendication 1 **caractérisé en ce que** lesdites plantes comprennent citrus sinensis.

6. Procédé selon la revendication 1 **caractérisé en ce que** ladite phase de mélange de l'huile végétale avec de l'ozone comprend la formation d'ozonides en quantité de 100 à 1500 pour chaque litre d'huile.
